# EUROPEAN PATENT APPLICATION

(11) **EP 2 658 141 A1**
(43) Date of publication of application: **30.10.2013**
(21) Application number: 13165073.1
(22) Date of filing: 24.04.2013
(51) Int. Cl.: H04B 7/02, H04L 5/00

(54) **Method, communication device and computer program of configuring CSI-RS for coordinated multiple point interference measurement**

(30) Priority: 27.04.2012 US 201261639092 P; 22.04.2013 US 201313868086
(71) Applicant: HTC Corporation, Taoyuan County 330 (TW)
(72) Inventor: Chu, Feng-Seng, 330 Taoyuan City (TW)
(74) Representative: Konkonen, Tomi-Matti Juhani

(57) **Abstract**

A method of configuring channel state information reference signals (CSI-RS) for a network in a wireless communication system includes indicating at least one CSI-RS configuration and at least one sub-band corresponding to each of the at least one CSI-RS configuration to a user equipment of the wireless communication system; wherein each of the at least one sub-band is associated with a frequency band where a corresponding CSI-RS configuration is effective within a sub-frame.

## Description

### Background1. Field of the Invention

The present embodiment of the invention relates to a method used in a wireless communication system, related communication device and related computer program product, and more particularly, to a method of configuring channel state information reference signals (CSI-RS) for coordinated multiple point (CoMP) interference measurement, related communication device and computer.

### 2. Description of the Prior Art

A long-term evolution (LTE) system supporting the 3GPP Rel-8 standard and/or the 3GPP Rel-9 standard has been developed by the 3rd Generation Partnership Project (3GPP) as a successor of a universal mobile telecommunications system (UMTS), for further enhancing performance of the UMTS to satisfy increasing needs of users. The LTE system includes a new radio interface and a new radio network architecture that provides a high data rate, low latency, packet optimization, and improved system capacity and coverage. In the LTE system, a radio access network known as an evolved universal terrestrial radio access network (E-UTRAN) includes multiple evolved Node-Bs (eNBs) for communicating with multiple user equipments (UEs), and communicates with a core network including a mobility management entity (MME), a serving gateway, etc., for Non Access Stratum (NAS) control.

An LTE-advanced (LTE-A) system, as its name implies, is an evolution of the LTE system. The LTE-A system targets faster switching between power states, improves performance at the coverage edge of an eNB, and includes advanced techniques, such as carrier aggregation (CA), coordinated multipoint (CoMP) transmission/reception, UL multiple-input multiple-output (MIMO), etc. For a UE and an eNB to communicate with each other in the LTE-A system, the UE and the eNB must support standards developed for the LTE-A system, such as the 3GPP Rel-10 standard or later versions.

When the CoMP is configured to a UE and multiple transmission points (e.g. a base station, a relay node, a pico eNB, a home eNB, or a remote antenna of a base station), the UE may communicate with the transmission points simultaneously, i.e., access a service via all or part of the transmission points. Among the transmission points that are involved in the CoMP, one of the transmission points is configured to be a serving point (e.g. serving cell). In general, link quality between the serving point and the UE is better than those between other transmission points and the UE. Control information required for the CoMP is usually communicated between the UE and the serving point first. Then, the serving point exchanges the control information with other transmission points such that the CoMP can operate accurately.

For the network to determine which CoMP scheme should be adopted for the UE and its data scheduling, the UE needs to estimate the channel conditions for the network. The UE may measure various types of reference signals such as channel state information reference signals (CSI-RS), which is used in 3GPP Rel-10, and report channel condition measurement results to the network.

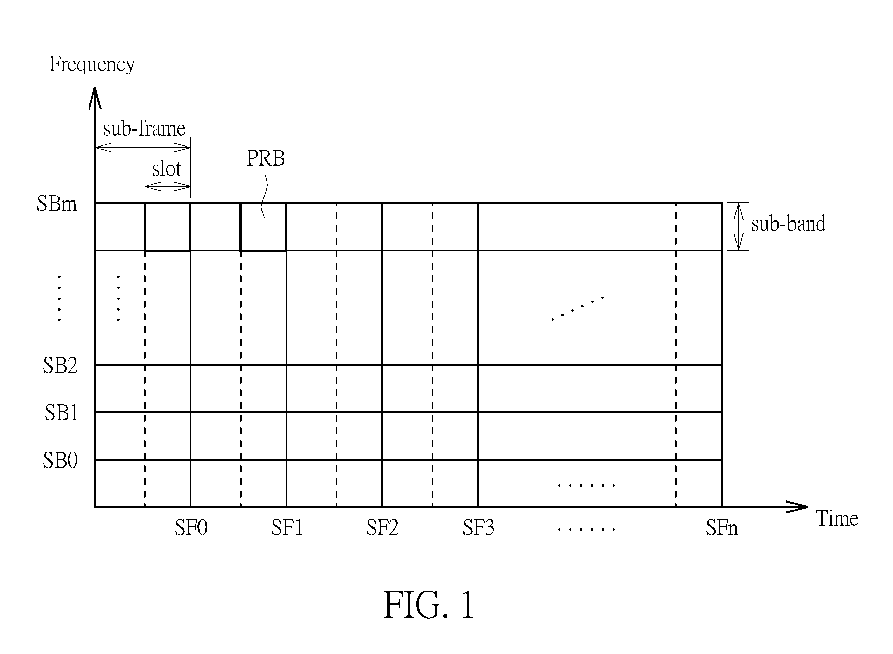

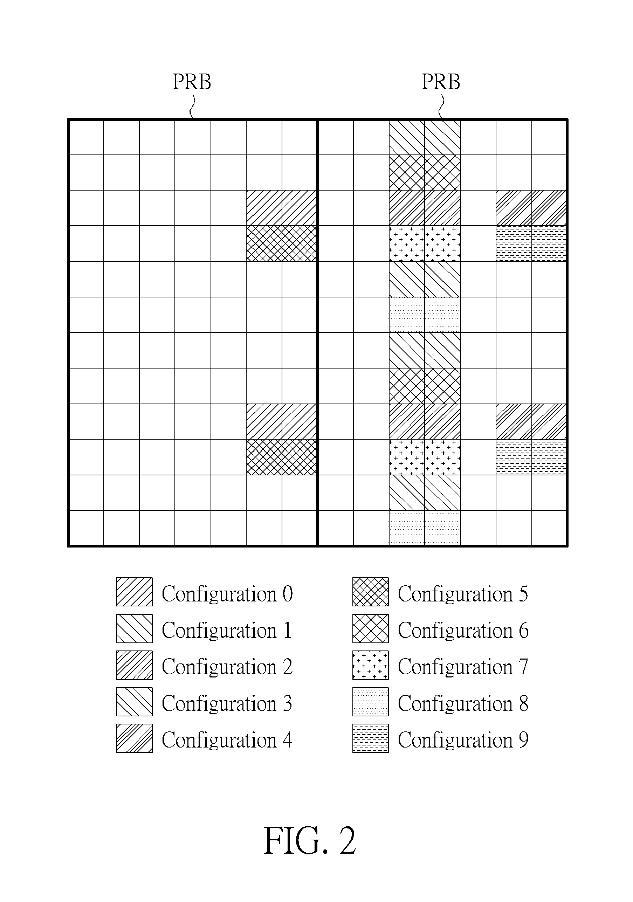

Please refer to FIG. 1, which illustrates a physical channel according to the prior art. A physical channel is divided into a plurality of sub-frames SFO-SFn in the time domain and a plurality of sub-bands SB0-SBm in the frequency domain. Each sub-frame is further divided into two slots in the time axis. The radio resource of a sub-band within one slot is called a physical resource block (PRB), and therefore, the radio resource of a sub-band within a sub-frame is regarded as a pair of PRBs (i.e. a PRB pair). A PRB pair is defined as a plurality of consecutive symbols in the time domain and a plurality of consecutive subcarriers in the frequency domain, and each element in the resource grid is called a resource element. The radio resource carrying CSI-RS is named as CSI-RS resource, which consists of a set of subcarriers in a pair of PRBs. Please refer to FIG. 2, which illustrates CSI-RS resources and configurations within a PRB pair when the transmission points have four antenna ports. In such a scenario, there are 10 CSI-RS configurations from Configuration 0 to Configuration 9, and each configuration consists of four resource elements within a PRB pair.

In the prior art, a configuration of CSI-RS is effective for all the PRB pairs within one sub-frame. Therefore, once a configuration is indicated to a UE, the UE considers that all of the PRB pairs within one sub-frame carry the CSI-RS of this configuration from the same antenna port and the same transmission point, either with non-zero or zero power. Since the UE experiences different interference when various CoMP schemes are configured, sufficient radio resources for reference signals in certain interval need to be available to allow the UE to measure and report channel conditions under different CoMP schemes. However, the conventional configuration method is insufficient in allocating radio resources for a plurality of transmission points involved in CoMP schemes. Thus, how to increase the utilization efficiency for CSI-RS resources is a topic to be discussed and addressed.

### Summary

The present invention therefore provides a method, related communication device and computer program product for configuring and measuring CSI-RS in a resource-efficient manner, so as to support more transmission points coordinated under different CoMP schemes without an additional expense of the radio resources.

The embodiment of the present invention discloses a method of configuring channel state information reference signals (CSI-RS) for a network in a wireless communication system. The method includes indicating at least one CSI-RS configuration and at least one sub-band corresponding to each of the at least one CSI-RS configuration to a user equipment of the wireless communication system; wherein each of the at least one sub-band is associated with a frequency band where a corresponding CSI-RS configuration is effective within a sub-frame.

The embodiment of the present invention further discloses a method of measuring channel state information reference signals (CSI-RS) for a user equipment in a wireless communication system. The method includes receiving indications of at least one CSI-RS configuration and at least one sub-band corresponding to each of the at least one CSI-RS configuration from a network of the wireless communication system; and transmitting a channel state information (CSI) report including a precoding matrix indicator (PMI), a channel quality indicator (CQI) or a rank indicator (RI) according to the indications; wherein each of the at least one sub-band is associated with a frequency band where a corresponding CSI-RS configuration is effective within a sub-frame.

The embodiment of the present invention further discloses a communication device of configuring channel state information reference signals (CSI-RS) for a network in a wireless communication system. The communication apparatus includes a processing means and a storage unit. The storage unit, which is coupled to the processing means, stores a program code, wherein the program code instructs the processing means to execute the following step: indicating at least one CSI-RS configuration and at least one sub-band corresponding to each of the at least one CSI-RS configuration to a user equipment of the wireless communication system; wherein each of the at least one sub-band is associated with a frequency band where a corresponding CSI-RS configuration is effective within a sub-frame.

The embodiment of the present invention further discloses a communication device of measuring channel state information reference signals (CSI-RS) for a user equipment in a wireless communication system. The communication apparatus includes a processing means and a storage unit. The storage unit, which is coupled to the processing means, stores a program code, wherein the program code instructs the processing means to execute the following steps: receiving indications of at least one CSI-RS configuration and at least one sub-band corresponding to each of the at least one CSI-RS configuration from a network of the wireless communication system; and transmitting a channel state information (CSI) report including a precoding matrix indicator (PMI), a channel quality indicator (CQI) or a rank indicator (RI) according to the indications; wherein each of the at least one sub-band is associated with a frequency band where a corresponding CSI-RS configuration is effective within a sub-frame.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a schematic diagram of a physical channel according to the prior art.

FIG. 2 is a schematic diagram of CSI-RS resources and configurations within a PRB pair when the transmission points have four antenna ports.

FIG. 3 is a schematic diagram of a wireless communication system according to an example of the present invention.

FIG. 4 is a schematic diagram of a communication device according to an example of the present invention.

FIG. 5 is a flowchart of a process according to an example of the present invention.

FIG. 6 is a flowchart of a process according to an example of the present invention.

### Detailed Description

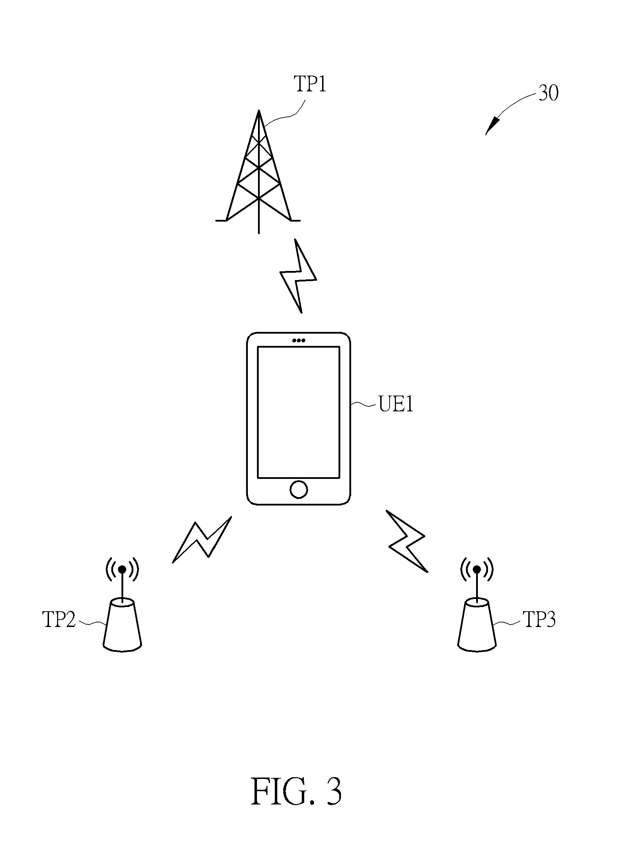

Please refer to FIG. 3, which is a schematic diagram of a wireless communication system 30 according to an example of the present invention. The wireless communication system 30 is briefly composed of transmission points TP1-TP3 (i.e., 3 cells) and a user equipment UE1. The wireless communication system 30 may be a wideband code division multiple access (WCDMA) system such as a universal mobile telecommunications system (UMTS). Alternatively, the wireless communication system 30 may be an orthogonal frequency-division multiplexing (OFDM) system and/or an orthogonal frequency-division multiple access (OFDMA) system, such as a long term evolution (LTE) system or an LTE-Advanced (LTE-A) system.

The transmission points TP1-TP3 perform coordinated multipoint transmission/reception (CoMP) (i.e., multi-cell transmissions and receptions) with the UEs. That is, the transmission points TP1-TP3 can jointly perform multi-cell transmissions and receptions with the user equipment UE1 to improve throughput of the user equipment UE1. Some or all of the transmission points TP1-TP3 can be serving points (i.e., serving cells) according to signal quality between the transmission points TP1-TP3 and the user equipment UE1.

Please note that the user equipment UE1 and the transmission points TP1-TP3 are simply utilized for illustrating the structure of the wireless communication system 30. Practically, a transmission point in the wireless communication system 30 may be a Node-B (NB) (i.e., macrocell base station (BS)) in a universal terrestrial radio access network (UTRAN) of the UMTS or an evolved NB (eNB) in an evolved UTRAN (E-UTRAN) of the LTE system or the LTE-A system, and is not limited herein. Alternatively, the transmission point may be an NB or an eNB with small coverage or a newly developed BS with all or part of functions of an NB or an eNB, e.g., a relay node, a femtocell BS, a picocell BS, or a remote antenna of a macrocell BS. Besides, the transmission point may be a remote radio head (RRH) in the LTE-A system. The user equipment UE1 may be a mobile device such as a mobile phone, a laptop, a tablet PC, an electronic book, or a portable computer system.

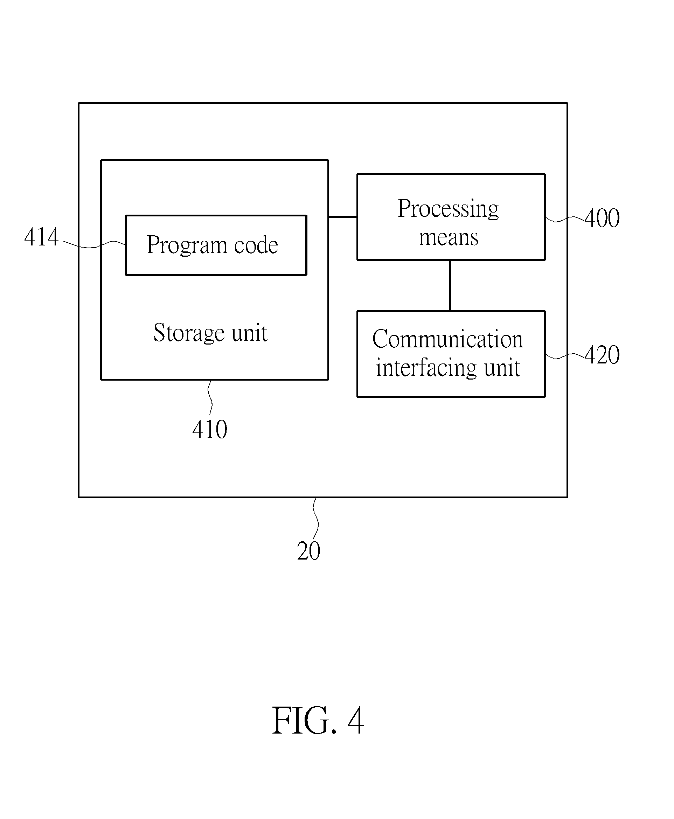

Please refer to FIG. 4, which is a schematic diagram of a communication device 40 according to an example of the present invention. The communication device 40 can be a UE or a transmission point shown in FIG. 3, but is not limited herein. The communication device 40 may include a processing means 400 such as a microprocessor or an Application Specific Integrated Circuit (ASIC), a storage unit 410 and a communication interfacing unit 420. The storage unit 410 may be any data storage device that can store a program code 414, accessed by the processing means 400. Examples of the storage unit 410 include but are not limited to a subscriber identity module (SIM), read-only memory (ROM), flash memory, random-access memory (RAM), CD-ROM/DVD-ROM, magnetic tape, hard disk, and optical data storage device. The communication interfacing unit 420 is preferably a radio transceiver that can transmit and receive signals (e.g., messages or packets) according to processing results of the processing means 400.

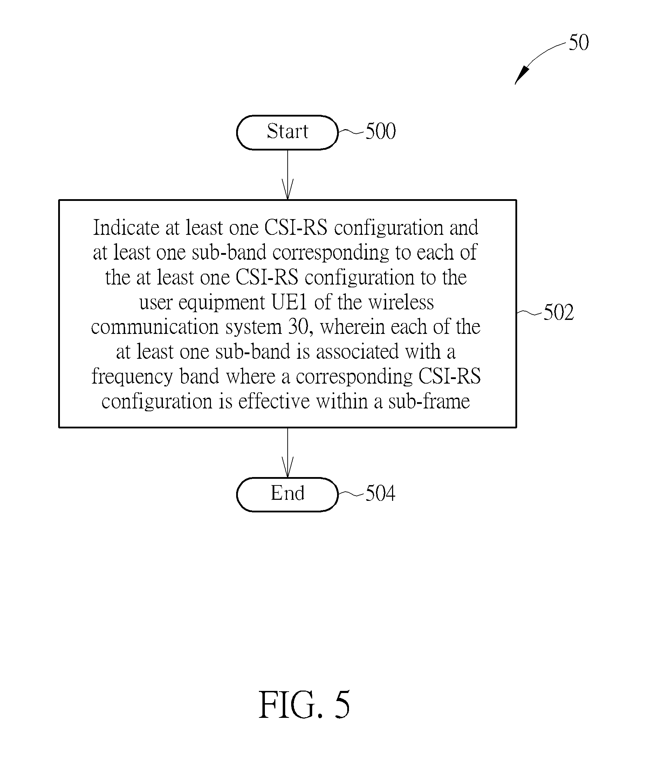

Please refer to FIG. 5, which is a flowchart of a process 50 according to an example of the present invention. The process 50 is utilized in the wireless communication system 30 shown in FIG. 3 for a network to configure channel state information reference signals (CSI-RS). The process 50 may be realized by the network through, for example, a central node (e.g. the transmission point TP1) among the set of the transmission points TP1-TP3. Alternatively, the process 50 may be realized by the network through the cooperation (e.g. exchanging coordination information) of serving points (i.e., serving cells) among some or all of the transmission points TP1-TP3. Furthermore, the process 50 may also be realized by a switching center such as a mobility management entity (MME) or a radio network controller (RNC), and is not limited herein. The process 50 is implemented by the communication device 40 and may be compiled into the program code 414. The process 50 includes the following steps:

Step 500: Start.

Step 502: Indicate at least one CSI-RS configuration and at least one sub-band corresponding to each of the at least one CSI-RS configuration to the user equipment UE1 of the wireless communication system 30, wherein each of the at least one sub-band is associated with a frequency band where a corresponding CSI-RS configuration is effective within a sub-frame.

Step 504: End.

Hereinafter, the transmission point TP1 is served as the serving point that coordinates the transmission points TP1-TP3 and controls information required for the CoMP technology for illustrating the process 50.

According to the process 50, the transmission point TP1 may indicate a CSI-RS configuration as well as a sub-band which is associated with a frequency band where the CSI-RS configuration is effective within a sub-frame to the user equipment UE1 of the wireless communication system 30. Please refer to FIG. 1 and FIG. 2. For example, after the transmission point TP1 determines that Configuration 0 is effective at sub-band SB0, the transmission point TP1 indicates both the Configuration 0 and the sub-band SB0 to the user equipment UE1 so that the user equipment UE1 considers the CSI-RS with the Configuration 0 only at the sub-band SB0. Since the Configuration 0 for a certain CoMP scheme (or a certain transmission point) is only effective at the frequency band associated with the sub-band SB0 instead of all the sub-bands SB0-SBm within a sub-frame, other sub-bands SB1-SBm can be used for other CoMP schemes. As a result, the present invention may allow a user equipment to measure the channel conditions from different transmission points by one CSI-RS configuration in different sub-bands within one sub-frame, and therefore, much more transmission points may be supported without consuming additional radio resources.

In an embodiment, multiple sub-bands may be used for a CSI-RS configuration. For example, the transmission point TP1 may determine that Configuration 0 is effective from sub-band SB0 to sub-band SB3 and then indicate the Configuration 0 and the sub-bands SB0-SB3 to the user equipment UE1 for a certain CoMP scheme. Similarly, the user equipment UE1 considers the CSI-RS with the Configuration 0 only at the frequency band associated with sub-bands SB0-SB3, and the remaining sub-bands SB4-SBm may be used for other CoMP schemes using Configuration 0.

Besides, more than one CSI-RS configuration with at least one sub-band for each CSI-RS configuration may be used within one sub-frame. For example, the transmission point TP1 may determine that Configuration 0 is effective at sub-band SB0 while Configuration 1 is effective at sub-band SB1. Then, the transmission point TP1 may indicate Configurations 0 along with sub-band SB0 and Configuration 1 along with sub-band SB1 to the user equipment UE1. Similarly, the user equipment UE1 considers the CSI-RS with the Configuration 0 only at the frequency band associated with the sub-band SB0 and considers the CSI-RS with Configuration 1 only at the frequency band associated with the sub-band SB1. Therefore, the remaining sub-bands SB1-SBm for Configuration 0 and the sub-bands SB0, SB2-SBm for Configuration 1 can be used for other CoMP schemes.

Note that the process 50 is an example of the present invention. Those skilled in the art should readily make combinations, modifications and/or alterations on the abovementioned description and examples. In an embodiment, sub-bands of the at least one sub-band indicated by the network for different CSI-RS configurations may be overlapping. For example, the transmission point TP1 may indicate Configuration 0 with effective sub-bands SB0-SB3 and also indicate Configuration 1 with effective sub-bands SB0-SB5 to the user equipment UE1. In another embodiment, sub-bands of the at least one sub-band indicated by the network for different CSI-RS configurations may be non-overlapping. For example, the transmission point TP1 may indicate Configuration 0 with effective sub-bands SB0-SB3 and indicate Configuration 1 with effective sub-bands SB4-SB5 to the user equipment UE1.

In addition, sub-bands of the at least one sub-band for a single CSI-RS configuration may be contiguous or non-contiguous. For example, the transmission point TP1 may indicate Configuration 0 with effective sub-bands SB3, SB5, SB7 to the user equipment UE1. Alternatively, sub-bands of the at least one sub-band for a single CSI-RS configuration may consist of a combination of contiguous and non-contiguous sub-bands. For example, the transmission point TP1 may indicate Configuration 0 with effective sub-bands SB3, SB5, SB7-SB10 to the user equipment UE1.

Moreover, the network can indicate the CSI-RS configuration(s) and the effective sub-band(s) in various ways. For example, the network may indicate the at least one CSI-RS configuration and the at least one sub-band corresponding to each of the at least one CSI-RS configuration to a UE in a dynamic way, such as new Downlink Control Information (DCI) format. The network may also indicate the at least one CSI-RS configuration and the at least one sub-band corresponding to each of the at least one CSI-RS configuration to a UE in a semi-static way, such as Radio Resource Control (RRC) signaling.

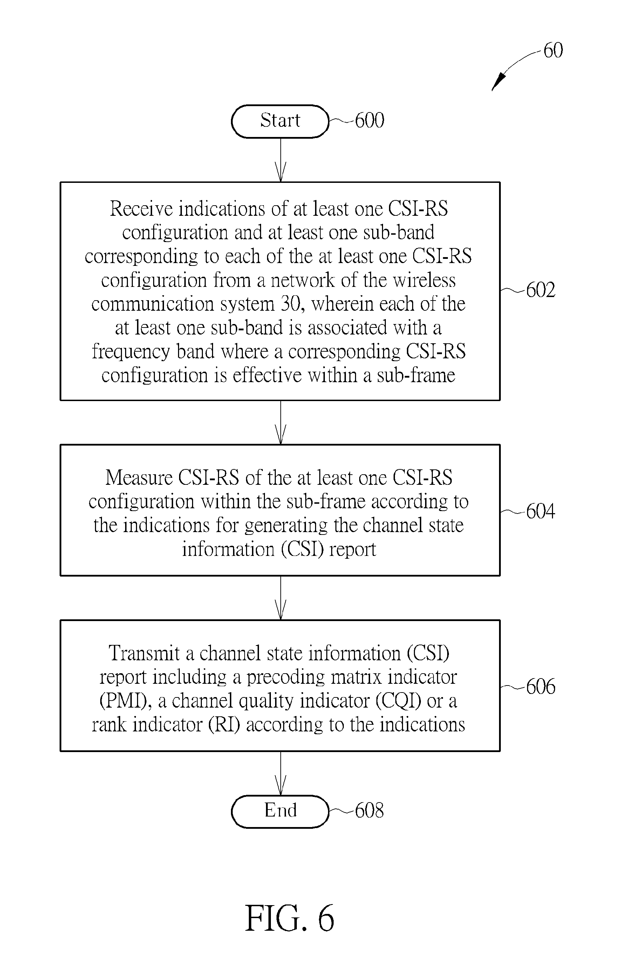

Please refer to FIG. 6, which is a flowchart of a process 60 according to an example of the present invention. The process 60 is utilized for a UE to measure channel state information reference signals (CSI-RS) in a wireless communication system. The UE could be the user equipment UE1 in the wireless communication system 30 and implemented by the communication device 40, and is not limited herein. The process 60 is implemented by the communication device 40 and may be compiled into the program code 414. The process 60 includes the following steps:

Step 600: Start.

Step 602: Receive indications of at least one CSI-RS configuration and at least one sub-band corresponding to each of the at least one CSI-RS configuration from a network of the wireless communication system 30, wherein each of the at least one sub-band is associated with a frequency band where a corresponding CSI-RS configuration is effective within a sub-frame.

Step 604: Measure CSI-RS of the at least one CSI-RS configuration within the sub-frame according to the indications for generating the channel state information (CSI) report.

Step 606: Transmit a channel state information (CSI) report including a precoding matrix indicator (PMI), a channel quality indicator (CQI) or a rank indicator (RI) according to the indications.

Step 608: End.

According to the process 60, the user equipment UE1 may receive an indication one CSI-RS configuration with an effective sub-band, one CSI-RS configuration with multiple effective sub-bands, or multiple CSI-RS configurations each with at least one effective sub-band from the network within one sub-frame. Then, the user equipment UE1 may measure the CSI-RS at the frequency band associated with the at least one sub-band according to the indications received from the network. The CSI report preferably includes PMI and/or CQI and/or RI for the network to determine a CoMP scheme.

Note that, the process 60 is an example of the present invention. Those skilled in the art should readily make combinations, modifications and/or alterations on the abovementioned description and examples. In an embodiment, the UE may receive an indication of overlapping sub-bands for different CSI-RS configurations. Since different CSI-RS configurations utilize different resource elements in a PRB pair, sub-bands can be reused by the network for different CSI-RS configurations, and the UE should be able to distinguish them. For example, indications of Configuration 0 and Configuration 1, both with effective sub-bands SB0-SB3, may be received by the user equipment UE1, so the user equipment UE1 need to measure CSI-RS with both Configuration 0 and Configuration 1 together at the sub-bands SB0-SB3. In another embodiment, the UE may receive an indication of non-overlapping sub-bands for different CSI-RS configurations, so the UE needs to be able to detect such difference.

Besides, the at least one sub-band for a single CSI-RS configuration in the indications may be contiguous or non-contiguous. The CSI-RS configurations and the effective sub-bands may be indicated in a dynamic way or a semi-static way. Moreover, the process 60 can be applied to non-zero power CSI-RS for measuring channel conditions. The process 60 can also be applied to non-zero power CSI-RS for measuring interference from other transmission points (i.e. other cells) while the serving transmission points are muting. These alterations and modifications should be within the scope of the present invention.

Please note that the processes 50, 60 and the above examples are realized based on that the transmitting point TP1 is served as a central node for executing steps such as dividing the transmission points TP1-TP3 into the transmission groups, associating the UE and the transmission groups, receiving the signal qualities, etc. However, the processes 50, 60 and the above examples can also be jointly realized by part or all of the transmission points TP1-TP3. That is, a UE only feed backs coordination information (e.g. signal qualities) to one of these transmission points, and these transmission points can share the coordination information via backhauls. Then, these transmission points can execute abovementioned steps accordingly. Preferably, these transmission points are serving points (i.e., serving cells). Furthermore, the process 50 can also be realized by a switching center such as a MME or a RNC, which usually has the coordination information for realizing the process 50, and is not limited herein.

Furthermore, the processes 50, 60 and the above examples may be applied for different types of CoMP schemes. For example, the network may serve Joint Processing (JP) such as Joint Transmission (JT), Dynamic point selection/muting (DPS/DPB), or a combination of JT and DPS. Alternatively, the CoMP network may serve Coordinated Scheduling/Beamforming (CS/CB) or a hybrid category of JP and CS/CB.

The above-mentioned steps of the processes 50, 60 including suggested steps may be realized by means of hardware, software, firmware, or an electronic system. Examples of hardware may include analog, digital and mixed circuits known as microcircuit, microchip, or silicon chip. Examples of the electronic system may include a system on chip (SOC), system in package (SiP), a computer on module (COM), and the communication device 40.

The embodiment of the present invention provides a method, communication device and computer program product for configuring CSI-RS by additionally indicating at least one sub-band with each CSI-RS configuration in a network and measuring the CSI-RS at the frequency band associated with the at least one sub-band in a UE. Therefore, by using the method, the capacity of CSI-RS transmissions is increased, and the radio resources are readily sufficient for CoMP interference measurement under multiple CoMP schemes.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of configuring channel state information reference signals (CSI-RS) for a network in a wireless communication system, the method comprising:
indicating at least one CSI-RS configuration and at least one sub-band corresponding to each of the at least one CSI-RS configuration to a user equipment of the wireless communication system;
wherein each of the at least one sub-band is associated with a frequency band where a corresponding CSI-RS configuration is effective within a sub-frame.

2. The method of claim 1, wherein sub-bands of the at least one sub-band for different CSI-RS configurations are overlapping or non-overlapping.

3. The method of claim 1, wherein sub-bands of the at least one sub-band for a single CSI-RS configuration are contiguous or non-contiguous.

4. A method of measuring channel state information reference signals (CSI-RS) for a user equipment in a wireless communication system, the method comprising:
receiving indications of at least one CSI-RS configuration and at least one sub-band corresponding to each of the at least one CSI-RS configuration from a network of the wireless communication system; and
transmitting a channel state information (CSI) report including a precoding matrix indicator (PMI), a channel quality indicator (CQI) or a rank indicator (RI) according to the indications;
wherein each of the at least one sub-band is associated with a frequency band where a corresponding CSI-RS configuration is effective within a sub-frame.

5. The method of claim 4, wherein sub-bands of the at least one sub-band for different CSI-RS configurations are overlapping or non-overlapping.

6. The method of claim 4, wherein sub-bands of the at least one sub-band for a single CSI-RS configuration are contiguous or non-contiguous.

7. The method of claim 4, further comprising:
measuring channel conditions on the CSI-RS within one sub-frame according to the indications, for generating the channel state information (CSI) report.

8. The method of claim 4, further comprising:
measuring interference from other transmission points within one sub-frame according to the indications, for generating the channel state information (CSI) report.

9. A computer program product, comprising computer program logic configured to put into effect the method of any of claims 1-8.

10. A communication apparatus for configuring channel state information reference signals (CSI-RS), the communication apparatus comprising:
a processing means; and
a storage unit, coupled to the processing means, for storing a program code,
wherein the program code instructs the processing means to execute the following step:
indicating at least one CSI-RS configuration and at least one sub-band corresponding to each of the at least one CSI-RS configuration to a user equipment;
wherein each of the at least one sub-band is associated with a frequency band where a corresponding CSI-RS configuration is effective within a sub-frame.

11. The communication apparatus of claim 10, wherein sub-bands of the at least one sub-band for different CSI-RS configurations are overlapping or non-overlapping.

12. The communication apparatus of claim 10, wherein sub-bands of the at least one sub-band for a single CSI-RS configuration are contiguous or non-contiguous.

13. A communication apparatus for measuring channel state information reference signals (CSI-RS), the communication apparatus comprising:
a processing means; and
a storage unit, coupled to the processing means, for storing a program code,
wherein the program code instructs the processing means to execute the following steps:
receiving indications of at least one CSI-RS configuration and at least one sub-band corresponding to each of the at least one CSI-RS configuration from a network; and
transmitting a channel state information (CSI) report including a precoding matrix indicator (PMI), a channel quality indicator (CQI) or a rank indicator (RI) according to the indications;
wherein each of the at least one sub-band is associated with a frequency band where a corresponding CSI-RS configuration is effective within a sub-frame.

14. The communication apparatus of claim 13, wherein sub-bands of the at least one sub-band for different CSI-RS configurations are overlapping or non-overlapping.

15. The communication apparatus of claim 13, wherein sub-bands of the at least one sub-band for a single CSI-RS configuration are contiguous or non-contiguous.

16. The communication apparatus of claim 13, wherein the program code further instructs the processing means to execute the following step:
measuring channel conditions on the CSI-RS within one sub-frame according to the indications, for generating the channel state information (CSI) report.
